# FASCICULE DE BREVET EUROPEEN

(11) **EP 3 324 798 B1**
(45) Date de publication et mention de la délivrance du brevet: **05.02.2020**
(21) Numéro de dépôt: 16757690.9
(22) Date de dépôt: 19.07.2016
(51) Int. Cl.: A47J 36/02, B05D 5/08, B05D 7/14, C09D 127/00

(54) **ARTICLE CULINAIRE COMPRENANT UN REVETEMENT A BASE DE RESINE FLUORO-CARBONEE ET D'OXYDE DE TERRE RARE ET PROCÉDÉ DE FABRICATION DE CET ARTICLE**
KÜCHENUSTENSIL MIT EINEM FLUOROCARBON UND SELTENE ERDE OXID ENTHALTENDER SCHICHT UND VERFAHREN ZUR HERSTELLUNG
COOKING VESSEL WITH A LAYER COMPRISING FLUOROCARBON RESIN AND RARE EARTH OXIDE AND METHOD OF MAKING

(30) Priorité: 20.07.2015 FR 1556846
(43) Date de publication de la demande: 30.05.2018
(73) Titulaire: SEB S.A., 69130 Ecully (FR)
(72) Inventeur: POLESEL MARIS, Jérôme, 54135 Mexy (FR); CAILLIER, Laurent, 74370 Pringy (FR); DUBANCHET, Aurélien, 73100 Gresy Sur Aix (FR)
(74) Mandataire: Soares, Luis Filipe
(86) Numéro de dépôt international: PCT/FR2016/051858
(87) Numéro de publication internationale: WO 2017/013352

(56) Documents cités:
- US-A- 4 180 609
- US-A1- 2011 287 251
- ZHAO-ZHU ZHANG ET AL: "Effect of rare earth compounds as fillers on friction and wear behaviors of PTFE-based composites", JOURNAL OF APPLIED POLYMER SCIENCE, vol. 72, no. 3, 18 avril 1999 (1999-04-18) , pages 361-369, XP055275804, US ISSN: 0021-8995, DOI: 10.1002/(SICI)1097-4628(19990418)72:3<361: :AID-APP6>3.3.CO;2-X

## Description

La présente invention concerne de manière générale un article culinaire dont au moins l'une des faces est munie d'un revêtement fluorocarboné comprenant des inclusions d'oxydes de terres rares. La présente invention concerne également un procédé de fabrication d'un tel article culinaire.

Le renforcement de la surface des articles culinaires antiadhésifs est une préoccupation constante car c'est un gage de durabilité d'usage.

De manière classique, on utilise, à titre de revêtement antiadhésif sur l'une au moins des faces d'un article culinaire, un revêtement à base de résine fluorocarbonée (par exemple du PTFE) frittée. De tels revêtements sont connus non seulement pour leurs propriétés antiadhésives, mais également pour leur résistance à des agressions de type chimique ou thermique.

Plus généralement, les articles culinaires, présentant sur leur face intérieure un revêtement antiadhésif, ont l'avantage d'être facilement nettoyables et de permettre de cuire des aliments avec peu, voire pas, de matière grasse. Toutefois, de tels articles présentent l'inconvénient majeur que le revêtement antiadhésif est fragile.

Par revêtement fragile, on entend notamment, au sens de la présente invention, un revêtement qui est susceptible d'être rayé suite à une agression de type mécanique comme celle provoquée par un frottage trop vigoureux du revêtement à l'aide d'un tampon abrasif.

Pour remédier à cet inconvénient majeur et obtenir un revêtement antiadhésif dont les propriétés mécaniques sont renforcées, il est connu de l'homme du métier de réaliser un revêtement antiadhésif multicouche, dont la première couche rencontrée à partir du support de l'article culinaire (couramment appelée « couche de primaire ») et servant d'accroche à une ou plusieurs couches supérieures du revêtement antiadhésif (couramment appelées « couches de finition ») contient, outre la résine fluorocarbonée frittée, une teneur élevée en charges minérales ou organiques dures (par exemple de la silice, du quartz ou de l'aluminium), comme décrit dans US2011/0287251.

L'adjonction de ce type de charges dans des revêtements comprenant au moins une résine fluorocarbonée permet d'améliorer leur résistance contre l'abrasion, la rayure et le peluchage (ou délamination des couches).

Cependant, ce type de renforcement reste nécessairement limité car la teneur en charges dans chaque couche du revêtement ne peut dépasser quelques pourcents en poids du poids total de la couche. Au-delà d'une certaine quantité seuil de charges, typiquement au-delà de 15% en poids de charges dans la couche, celle-ci peut perdre sa cohésion, notamment si c'est une couche de primaire, ou bien encore perdre des propriétés d'antiadhésivité, notamment si c'est une couche de finition.

Par ailleurs, il est également connu de l'homme du métier de former une sous-couche dure (ou base dure) entre le support (en l'occurrence une face d'un article culinaire) et le revêtement antiadhésif (notamment la couche de primaire).

La réalisation d'une sous-couche dure (ou base dure) entre le support et le revêtement antiadhésif permet non seulement d'améliorer les propriétés mécaniques du revêtement antiadhésif (notamment en termes de dureté), mais également de lui conférer une résistance élevée à la rayure.

La sous-couche dure (ou base dure) forme alors une barrière qui empêche que les rayures n'atteignent le support.

Pour notamment s'abstenir de l'application d'une telle sous-couche dure, la demanderesse a maintenant trouvé que l'application d'une composition comprenant une résine fluorocarbonée et un ou plusieurs oxydes de terres rares, directement sur le support, ou éventuellement sur une couche de primaire, permet de renforcer les propriétés mécaniques (notamment en termes de dureté et de résistance à l'abrasion) du revêtement sans en dégrader l'antiadhésivité.

*A contrario* des charges utilisées actuellement (SiO₂, Al₂O₃, TiO₂) pour renforcer les revêtements, les charges d'oxydes de terres rares présentent l'avantage d'être à la fois dures et hydrophobes ce qui a pour effet de renforcer les propriétés de résistance à la rayure et à l'abrasion du revêtement à base de résine fluorée sans en dégrader les propriétés antiadhésives.

Plus particulièrement, la présente invention a pour objet un article culinaire présentant des propriétés mécaniques améliorées, comprenant un support présentant une face intérieure pouvant recevoir des aliments et une face extérieure destinée à être disposée vers une source de chaleur, et un revêtement disposé sur au moins l'une des deux faces, caractérisé en ce que le revêtement comprend au moins une couche comprenant :
- une matrice de résine fluorocarbonée, seule ou en mélange avec une résine d'accroche thermostable et résistante à une température supérieure à 200°C, cette ou ces résines formant un réseau continu fritté, et
- des charges d'oxydes de terres rares dispersées dans ladite matrice, 50 % desdites charges ayant au moins leur plus grande dimension caractéristique supérieure ou égale à 0,1 µm.

La présence des charges d'oxydes de terres rares dans la matrice de résine fluorocarbonée permet notamment d'obtenir des revêtements dont les propriétés mécaniques sont améliorées par rapport à des revêtements qui en sont exempts.

Si les charges d'oxydes de terres rares sont de taille micrométrique, le revêtement de l'article culinaire selon l'invention présente des propriétés mécaniques améliorées par rapport à des revêtements comprenant des charges d'oxydes de terres rares de taille nanométrique.

De manière avantageuse, la résine fluorocarbonée peut être choisie dans le groupe comprenant le polytétrafluoroéthylène (PTFE), le PTFE modifié, les copolymères de tétrafluoroéthylène et de perfluoropropylvinyléther (PFA), les copolymères de tétrafluoroéthylène et d'hexafluoropropène (FEP).

De préférence, la résine fluorocarbonée peut être le polytétrafluoroéthylène (PTFE), ou un mélange de PTFE et de PFA (PTFE/PFA), ou un mélange de PTFE et de FEP (PTFE/FEP), ou un mélange de PTFE, de PFA et de FEP (PTFE/PFA/FEP).

Dans le cadre de la présente invention, la résine fluorocarbonée peut être utilisée en mélange avec une résine d'accroche, qui peut être choisie parmi les polyamides imides (PAI), les polyéthers imides (PEI), les polyamides (PI), les polyéthercétones (PEK), les polyétheréthercétones (PEEK), les polyéthersulfures (PES), les sulfures de polyphénylène (PPS), et leurs mélanges.

Ces résines d'accroche ont l'avantage d'être thermostables et résistantes à une température supérieure à 200°C.

De manière préférée, le revêtement recouvrant l'une au moins des deux faces du support peut comprendre une couche de primaire et au moins une couche de finition, l'une au moins des couches de finition définissant une couche de surface, la couche de primaire et la ou les couche(s) de finition comprenant chacune au moins une résine fluorocarbonée frittée, seule ou en mélange avec une résine d'accroche, qui forme(nt) un réseau continu fritté de résine fluorocarbonée, et le cas échéant, de résine d'accroche.

Avantageusement, le revêtement recouvrant l'une au moins des deux faces du support peut comprendre des charges permettant de faciliter la conduction thermique à l'intérieur du revêtement antiadhésif, par exemple des charges minérales ou organiques et/ou pigments.

Il est à noter que d'une manière générale, il est moins souhaitable d'introduire ces charges dans la couche de finition superficielle car elles conduiraient à abaisser le caractère antiadhésif du revêtement.

Par contre, l'introduction, dans au moins une couche de finition, de charges d'oxydes de terres rares n'en altère pas son caractère antiadhésif puisque les charges d'oxydes de terres rares ont l'avantage d'être hydrophobes. Par conséquent, les charges d'oxydes de terres rares seront de préférence introduites dans l'une au moins des couches de finition.

De manière avantageuse, les charges d'oxydes de terres rares peuvent être des charges d'oxyde de lanthanide.

De préférence, les charges d'oxydes de terres rares peuvent comprendre de l'oxyde de cérium, seul ou en mélange avec au moins un autre oxyde de lanthanide.

De manière avantageuse, 50 % des charges d'oxydes de terres rares ont au moins leur plus grande dimension caractéristique comprise entre 0,1 µm et 50 µm.

Selon un mode de réalisation, 50 % des charges d'oxydes de terres rares ont au moins leur plus grande dimension caractéristique comprise entre 1 µm et 50 µm, et de préférence entre 5 µm et 25 µm. Avantageusement, de telles tailles de charges sont utilisées lorsque lesdites charges sont introduites dans une couche qui n'a pas vocation à être translucide.

L'introduction de charges d'oxydes de terres rares caractérisées par une telle granulométrie permet de réaliser des revêtements opaques caractérisés par de bonnes résistances mécaniques.

Selon un autre mode de réalisation, 50% des charges d'oxydes de terres rares ont au moins leur plus grande dimension caractéristique comprise entre 0,1 µm et 1 µm, et de préférence entre 0,1 µm et 0,3 µm. Avantageusement, de telles tailles de charges sont utilisées lorsque lesdites charges sont introduites dans une couche qui doit rester translucide afin de laisser apparaitre une couleur ou un décor de couche(s) inférieure(s).

L'introduction de charges d'oxydes de terres rares caractérisées par une telle granulométrie permet de réaliser un film transparent possédant à la fois de bonnes propriétés mécaniques, tout en conservant la translucidité de la couche pour que la lumière incidente puisse la traverser (en totalité ou en partie).

De manière avantageuse, les charges d'oxydes de terres rares sont présentes en une teneur comprise entre 0,1 et 20 % en poids par rapport au poids total sec de la couche.

Par exemple, pour la réalisation d'une couche opaque, on introduira de préférence des charges d'oxydes de terres rares dont 50 % ont au moins leur plus grande dimension caractéristique comprise entre 0,1 et 50 µm (de préférence entre 5 µm et 25 µm) en une teneur comprise entre 1 et 10 % en poids par rapport au poids total sec de la couche.

Par contre, pour la réalisation d'une couche transparente, on introduira de préférence des charges d'oxydes de terres rares dont 50 % ont au moins leur plus grande dimension caractéristique comprise entre 0,1 µm et 1 µm (de préférence entre 0,1 µm et 0,3 pm) en une teneur comprise entre 0,1 et 3 % en poids par rapport au poids total sec de la couche.

Dans le cadre de la présente invention, l'épaisseur sèche de la couche comprenant une ou plusieurs charges d'oxydes de terres rares est comprise entre 1 µm et 25 µm. Ces épaisseurs valent aussi bien pour les couches opaques que pour les couches transparentes.

Il est à noter que de préférence, les charges d'oxydes de terres rares comprises dans la matrice de résine fluorocarbonée ne font pas saillie, de manière à éviter de rayer toute surface (telle qu'une plaque de cuisson) pouvant être en contact avec le revêtement selon l'invention.

Il est à noter qu'avantageusement, le support peut être en matériau métallique, en verre, en céramique ou en terre cuite.

De préférence, on utilisera pour l'article selon l'invention un support métallique, qui peut avantageusement être en aluminium, anodisé ou non, éventuellement poli, brossé, sablé ou microbillé, ou en acier éventuellement poli, brossé, sablé ou microbillé, ou en acier inoxydable éventuellement poli, brossé, sablé ou microbillé, ou en fonte d'acier, d'aluminium ou de fer, ou en cuivre éventuellement martelé ou poli.

Préférentiellement, le support métallique de l'article selon l'invention peut comprendre une alternance de couches en métal et/ou en alliage métallique, ou est une calotte d'aluminium de fonderie, d'aluminium ou d'alliages d'aluminium doublée d'un fond extérieur en acier inoxydable.

Par exemple, à titre de support comprenant une alternance de couches en métal et/ou en alliages métalliques (ou suivant une structure composite multicouche), il peut être envisagé d'utiliser un support constitué d'un empilement d'une couche d'un acier inoxydable ferritique, d'une couche d'aluminium et d'une couche d'un acier inoxydable austénitique. Il peut également être choisi d'utiliser un support comportant un empilement d'une couche d'un acier inoxydable, d'une couche d'aluminium, d'une couche de cuivre, d'une autre couche d'aluminium et d'une couche d'un acier inoxydable austénitique.

Enfin, la présente invention concerne également un procédé de fabrication d'un article culinaire selon l'invention.

Plus particulièrement, la présente invention a pour objet un procédé de fabrication d'un article culinaire comprenant les étapes suivantes :
a) fourniture d'un support ;
b) préparation d'une dispersion aqueuse de résine fluorocarbonée, éventuellement en mélange avec la résine d'accroche ;
c) dispersion des charges d'oxydes de terres rares dans la dispersion de résine fluorocarbonée ;
d) application de la dispersion obtenue à l'étape c) sur la au moins une face du support ; et
e) cuisson de l'ensemble.

A titre de support, on peut utiliser, dans le cadre du procédé selon l'invention, une préforme se présentant sous forme d'un support plan. Dans ce cas, le procédé selon l'invention comprendra en outre une étape de mise en forme de la préforme jusqu'à obtenir la forme de l'article souhaitée, l'étape de mise en forme étant réalisée antérieurement à l'étape e) de cuisson.

On peut également envisager différents types d'articles conformes à l'invention. Par exemple, dans le domaine culinaire, on peut envisager des disques plans destinés à être emboutis pour présenter la forme finale d'un article culinaire, ou des articles culinaires en tant que tels, destinés ou non à la cuisson d'aliments.

Par disque plan, on entend, au sens de la présente invention, une pièce pleine et ronde métallique, commercialement plate découpée dans une tôle ou une bande.

Dans ce cas, l'article culinaire visé aura typiquement la forme d'une calotte.

On peut également utiliser d'autres types de supports plans, dont le format est adapté à l'article culinaire que l'on souhaite réaliser (notamment de format elliptique, rectangulaire ou carré).

Il est à noter que les procédés de fabrication d'articles culinaires ne sont pas remis en question par la nouvelle composition du revêtement selon l'invention. Ainsi, de manière tout à fait classique, les charges d'oxydes de terres rares peuvent être introduites à l'état sec (sous forme de poudre), sous forme d'une dispersion aqueuse ou solvantée (comprenant un ou plusieurs solvants), dans les dispersions aqueuses comprenant au moins une résine fluorocarbonée.

Par solvant, on entend, au sens de la présente invention, des composés organiques ou organiques-inorganiques ne générant pas de résidus carbonés.

Il est à noter que l'avantage de l'utilisation d'un solvant par rapport à l'eau est qu'il est plus volatile. Une fraction importante des composés carbonés est donc éliminée très rapidement par le séchage juste après l'application.

De manière avantageuse, le solvant a un point d'ébullition compris entre 30°C et 200°C.

Lorsque le point d'ébullition est trop bas, c'est-à-dire inférieur à 30°C, la dispersion est difficile à manipuler car susceptible de séchage prématuré, en particulier sur les couches, ce qui nuit à la qualité et à la productivité du dépôt.

Lorsque le point d'ébullition est trop élevé, c'est-à-dire supérieur à 200°C, le séchage préalable doit être très puissant, ce qui demande un fort apport énergétique.

Le solvant a un point d'ébullition compris entre 30°C et 200°C, et de préférence compris entre 50°C et 140°C.

Lorsque le point d'ébullition est compris entre 50°C et 140°C, cela correspond à des solvants dont la vitesse de séchage est optimale, ne créant pas de séchage prématuré pendant l'application et ne nécessitant pas de moyens de chauffage démesurés. Cette gamme de températures (50°C-140°C) correspond également à des solvants dont les propriétés en termes de sécurité sont acceptables.

Parmi les types de solvants utilisables dans le cadre de la présente invention, on peut notamment citer les alcanes aliphatiques, cycliques ou alicycliques, les solvants aromatiques, les éthers et les esters, les alcools et les cétones.

Il est à noter que la viscosité des dispersions selon l'invention est ajustable et peut être adaptée en fonction de la technique d'application qui est choisie. On peut tout à fait réaliser un revêtement selon l'invention en procédant à une application ponctuelle et localisée pour élaborer une couche homogène comprenant une résine fluorocarbonée et une ou plusieurs charges d'oxydes de terres rares.

Pour appliquer les compositions selon l'invention, on peut notamment citer les techniques d'application choisies parmi la sérigraphie, la tampographie, la pulvérisation, la flexographie, l'enduction et l'impression jet d'encre.

La réalisation d'une couche de revêtement selon l'invention, présentant des propriétés mécaniques améliorées, peut être effectuée en une seule étape, par l'application d'une ou plusieurs couches homogènes comprenant une résine fluorocarbonée et une ou plusieurs charges d'oxydes de terres rares directement sur un support, les charges d'oxydes de terres rares étant régulièrement réparties dans l'épaisseur de la couche.

Toutefois, de manière classique, les revêtements des articles culinaires comprennent plusieurs couches, et notamment au moins une couche de primaire et au moins une couche de finition, les couches de primaire et de finition étant à base de résine fluorocarbonée, éventuellement mélangées avec une résine d'accroche thermostable résistante à une température supérieure à 200°C, la couche superficielle de finition comprenant au moins une résine fluorocarbonée et une ou plusieurs charges d'oxydes de terres rares.

A titre d'exemples non limitatifs d'articles culinaires conformes à la présente invention, on citera notamment des articles culinaires tels que les casseroles et les poêles, les woks et les sauteuses, les crêpières, les grills, les moules et plaques pour la pâtisserie, les plaques et grilles de barbecue.

D'autres avantages et particularités de la présente invention résulteront de la description qui va suivre, donnée à titre d'exemples non limitatifs.

Dans ces exemples, sauf indication contraire, tous les pourcentages et parties sont exprimés en pourcentages massiques.

### EXEMPLES

### Produits

- support en aluminium ;
- dispersion aqueuse de PTFE à 60 % ;
- octyl phénol éthoxylate ;
- dispersion aqueuse de noir de carbone à 25 % ;
- silice colloïdale sous forme de solution aqueuse à 30% de silice, commercialisée par la société Clariant sous la dénomination commerciale Klebosol ;
- polyamide imide en solution aqueuse ;
- émulsion de polymère acrylique à 5 % de charges d'alumine ;
- eau ;
- paillettes de mica traitées ;
- alumine F400 (D50 = 17,3 microns).

### Tests

### Test de rayure

On évalue la résistance à l'abrasion du revêtement en soumettant la couche de finition à l'action d'un tampon abrasif de type SCOTCH BRITE (marque déposée) vert. La résistance à l'abrasion du revêtement est estimée qualitativement, après de multiples passages du tampon abrasif soumis à un poids de 21 N. L'action du tampon abrasif est soit arrêtée lorsque l'opérateur note l'apparition d'une rayure (correspondant à l'apparition du métal constitutif du support ou de la couche sous-jacente de la couche de finition), soit après avoir réalisé 36000 cycles (un cycle équivaut à un va-et-vient). Tous les 1000 cycles, on procède au renouvellement du tampon usé par un tampon neuf.

### Test de perte d'antiadhésivité

On évalue les caractéristiques d'antiadhésivité du revêtement de finition au moyen du test au lait carbonisé selon la norme NF D 21-511. L'opérateur note l'apparition de la rayure et réalise un test d'adhésion de lait brûlé à chaque renouvellement de tampon (voir tableau 6 de résultats).

### EXEMPLES REALISES (compositions et conditions expérimentales)

Pour ce qui concerne l'exemple 1 et les exemples comparatifs 1 et 2, on prépare une composition de primaire à base de PTFE, dont la composition est indiquée dans le tableau 1 ci-après.

Cette composition forme, après son application par pulvérisation sur un support en aluminium ayant subi au préalable un traitement de surface et un grenaillage, une couche de primaire d'un revêtement selon l'invention, comprenant des oxydes de terres rares (pour l'exemple 1), ou d'un revêtement classique soit comprenant des inclusions d'alumine, soit étant exempt de charge (exemples comparatifs 1 et 2 respectivement).

Après enduction de la couche de primaire, celle-ci est séchée à 70°C pendant 4 minutes.

**Tableau 1**

| **Constituants de la composition de primaire** | **Quantités en pourcentage massique (% en humide)** |
|---|---|
| Dispersion aqueuse de PTFE à 60% | 22,0 |
| Octyl phénol éthoxylate | 0,3 |
| Dispersion aqueuse de noir de carbone à 25% | 3,6 |
| Silice colloïdale à 30% | 14,5 |
| Polyamide imide en solution dans l'eau | 38,4 |
| Emulsion de polymère acrylique à 5% | 4,2 |
| Charges d'alumine | 1,5 |
| Eau | 15,5 |
| TOTAL | 100,0 |

### EXEMPLE 1 selon l'invention

On prépare une composition de finition avec inclusion de charges d'oxyde de cérium, dont la composition est indiquée dans le tableau 2 ci-après.

Après l'application de la composition de primaire sur le support en aluminium (selon les conditions indiquées ci-dessus) et le refroidissement de la couche de primaire formée, la composition de finition avec inclusion de charge d'oxydes de terres rares est appliquée par pulvérisation sur la couche de primaire.

Puis, on procède à un séchage de la couche de finition avec inclusion de charge d'oxydes de terres rares ainsi réalisée à 70°C pendant 1 minute, et l'ensemble subit ensuite une cuisson à 415°C durant 11 minutes.

Les épaisseurs des films cuits sont de 10 microns pour la couche de primaire et de 18 microns pour la couche de finition avec inclusion de charge d'oxydes de terres rares.

**Tableau 2**

| **Constituants de la composition de finition** avec inclusion de charge d'oxydes de terres rares | **Quantités en pourcentage massique (% en humide) (exemple préférentiel)** |
|---|---|
| Dispersion aqueuse de PTFE à 60% | 84,0 |
| Paillettes de mica traitées | 0,2 |
| Emulsion de polymère acrylique à 5% | 10,0 |
| Oxyde de cérium (D50 = 17,6 microns) | 2,8 |
| Eau | 3,0 |
| TOTAL | 100,0 |

### EXEMPLE COMPARATIF 1

On prépare une composition de finition avec inclusion de charges d'alumine, dont la composition est indiquée dans le tableau 3 ci-après.

Après l'application de la composition de primaire sur le support en aluminium (selon les conditions indiquées ci-dessus) et le refroidissement de la couche de primaire formée, la composition de finition avec inclusion de charges d'alumine est appliquée par pulvérisation sur la couche de primaire.

Puis, on procède à un séchage de la couche de finition avec inclusion de charges d'alumine ainsi réalisée à 70°C pendant 1 minute, et l'ensemble subit ensuite une cuisson à 415°C durant 11 minutes.

Les épaisseurs des films cuits sont de 10 microns pour la couche de primaire et de 18 microns pour la couche de finition avec inclusion de charges d'alumine.

**Tableau 3**

| **Constituants de la composition de finition** avec inclusion de charges d'alumine | **Quantités en pourcentage massique (% en humide) (exemple préférentiel)** |
|---|---|
| Dispersion aqueuse de PTFE à 60% | 84,0 |
| Paillettes de mica traitées | 0,2 |
| Emulsion de polymère acrylique à 5% | 10,0 |
| Alumine F400 (D50 = 17,3 microns) | 2,8 |
| Eau | 3,0 |
| TOTAL | 100,0 |

### EXEMPLE COMPARATIF 2

Pour ce qui concerne l'exemple comparatif 2, on prépare une composition de finition non chargée, dont la composition est indiquée dans le tableau 4 ci-après.

Après l'application de la composition de primaire sur le support en aluminium (selon les conditions indiquées ci-dessus) et le refroidissement de la couche de primaire formée, la composition de finition non chargée est appliquée par pulvérisation sur la couche de primaire.

Puis on procède à un séchage de la couche de finition non chargée ainsi réalisée à 70°C pendant 1 minute, et l'ensemble subit ensuite une cuisson à 415°C durant 11 minutes.

Les épaisseurs des films cuits sont de 10 microns pour la couche de primaire et de 18 microns pour la couche de finition non chargée.

**Tableau 4**

| **Constituants de la composition de finition non chargée** | **Quantités en pourcentage massique (% en humide) (exemple préférentiel)** |
|---|---|
| Dispersion aqueuse de PTFE à 60% | 86,8 |
| Paillettes de mica traitées | 0,2 |
| Emulsion de polymère acrylique à 5% | 10,0 |
| Eau | 3,0 |
| TOTAL | 100,0 |

### RESULTATS DES TESTS REALISES

### Test de rayure et de perte d'antiadhésivité des revêtements obtenus

On évalue l'aptitude à résister à l'abrasion et à la perte d'antiadhésivité des revêtements réalisés dans l'exemple 1 et les exemples comparatifs 1 et 2 conformément aux tests indiqués précédemment. Les résultats obtenus sont présentés dans le tableau 5 ci-dessous :

**Tableau 5**

| **Exemples** | **Apparition de la rayure après 36000 cycles** | **Antiadhésivité après 36000 cycles** |
|---|---|---|
| Exemple 1 | Non | Excellente |
| Exemple comparatif 1 | Non | Adhérence du lait |
| Exemple comparatif 2 | Oui à 26000 cycles | Excellente |

Ce tableau 5 met en évidence que l'inclusion de charges d'oxyde de cérium dans la couche de finition permet de renforcer les propriétés mécaniques du revêtement sans en dégrader l'antiadhésivité.

## Revendications

1. Article culinaire comprenant un support présentant une face intérieure pouvant recevoir des aliments et une face extérieure destinée à être disposée vers une source de chaleur, et un revêtement disposé sur au moins l'une des deux faces,
ledit article culinaire étant **caractérisé en ce que** le revêtement comprend au moins une couche comprenant :
• une matrice de résine fluorocarbonée, seule ou en mélange avec une résine d'accroche thermostable et résistante à une température supérieure à 200°C, cette ou ces résines formant un réseau continu fritté, et
• des charges d'oxydes de terres rares dispersées dans ladite matrice, 50 % desdites charges ayant au moins leur plus grande dimension caractéristique supérieure ou égale à 0,1 µm.

2. Article culinaire selon la revendication 1, dans lequel la résine fluorocarbonée est choisie dans le groupe comprenant le polytétrafluoroéthylène (PTFE), le PTFE modifié, les copolymères de tétrafluoroéthylène et de perfluoropropylvinyléther (PFA), les copolymères de tétrafluoroéthylène et d'hexafluoropropène (FEP).

3. Article culinaire selon la revendication 2, dans lequel la résine fluorocarbonée est le polytétrafluoroéthylène (PTFE), ou un mélange de PTFE et de PFA (PTFE/PFA), ou un mélange de PTFE et de FEP (PTFE/FEP), ou un mélange de PTFE, de PFA et de FEP (PTFE/PFA/FEP).

4. Article culinaire selon l'une quelconque des revendications précédentes, dans lequel la résine d'accroche est choisie parmi les polyamides imides (PAI), les polyéthers imides (PEI), les polyamides (PI), les polyéthercétones (PEK), les polyétheréthercétones (PEEK), les polyéthersulfures (PES), les sulfures de polyphénylène (PPS), et leurs mélanges.

5. Article culinaire selon l'une quelconque des revendications précédentes, dans lequel les charges d'oxydes de terres rares sont des charges d'oxyde de lanthanide.

6. Article culinaire selon la revendication 5, dans lequel les charges d'oxydes de terres rares comprennent de l'oxyde de cérium, seul ou en mélange avec au moins un autre oxyde de lanthanide.

7. Article culinaire selon l'une quelconque des revendications précédentes, dans lequel 50 % des charges d'oxydes de terres rares ont au moins leur plus grande dimension caractéristique comprise entre 0,1 µm et 50 µm.

8. Article culinaire selon la revendication 7, dans lequel 50% des charges d'oxydes de terres rares ont au moins leur plus grande dimension caractéristique comprise entre 1 µm et 50 µm, et de préférence entre 5 µm et 25 µm.

9. Article culinaire selon la revendication 7, dans lequel 50% des charges d'oxydes de terres rares ont au moins leur plus grande dimension caractéristique comprise entre 0,1 µm et 1 µm, et de préférence entre 0,1 µm et 0,3 µm.

10. Article culinaire selon l'une quelconque des revendications précédentes, dans lequel les charges d'oxydes de terres rares sont présentes en une teneur comprise entre 0,1 et 20 % en poids par rapport au poids total sec de la couche.

11. Article culinaire selon l'une quelconque des revendications précédentes, dans lequel l'épaisseur sèche de ladite couche est comprise entre 1 µm et 25 µm.

12. Article culinaire selon l'une quelconque des revendications précédentes, dans lequel le support est en matériau métallique, en verre, en céramique ou en terre cuite.

13. Article culinaire selon la revendication 12, dans lequel le support est métallique et est en aluminium, anodisé ou non, éventuellement poli, brossé, sablé ou microbillé, ou en acier éventuellement poli, brossé, sablé ou microbillé, ou en acier inoxydable éventuellement poli, brossé, sablé ou microbillé, ou en fonte d'acier, d'aluminium ou de fer, ou en cuivre éventuellement martelé ou poli.

14. Article culinaire selon la revendication 13, dans lequel le support est métallique et comprend une alternance de couches en métal et/ou en alliage métallique ou est une calotte d'aluminium de fonderie, d'aluminium ou d'alliages d'aluminium doublée d'un fond extérieur en acier inoxydable.

15. Procédé de fabrication d'un article culinaire tel que défini selon l'une quelconque des revendications 1 à 14, ledit procédé comprenant les étapes suivantes :
a) fourniture d'un support ;
b) préparation d'une dispersion aqueuse de résine fluorocarbonée, éventuellement en mélange avec la résine d'accroche ;
c) dispersion des charges d'oxydes de terres rares dans la dispersion de résine fluorocarbonée ;
d) application de la dispersion obtenue à l'étape c) sur la au moins une face du support ; et
e) cuisson de l'ensemble.

## Patentansprüche

1. Kochartikel, umfassend einen Träger, der eine innere Oberfläche, die Nahrungsmittel aufnehmen kann, und eine äußere Oberfläche vorweist, die zum Anordnen an eine Wärmequelle bestimmt ist, und eine Beschichtung, die auf mindestens einer der beiden Seiten angeordnet ist,
wobei der Kochartikel **dadurch gekennzeichnet ist, dass** die Beschichtung mindestens eine Schicht umfasst, umfassend:
• eine Matrix aus Fluorkohlenstoffharz, allein oder im Gemisch mit einem thermostabilen und bei einer Temperatur von mehr als 200°C hitzebeständigen Befestigungsharz, wobei dieses oder diese Harze ein gesintertes kontinuierliches Netz bilden, und
• Füllstoffe aus Seltenerdoxiden, die in der Matrix dispergiert sind, wobei 50% der Füllstoffe mindestens ihre größte charakteristische Abmessung von größer oder gleich 0,1 µm haben.

2. Kochartikel nach Anspruch 1, wobei das Fluorkohlenwasserstoffharz aus der Gruppe ausgewählt ist, die Polytetrafluorethylen (PTFE), modifiziertes PTFE, Copolymere von Tetrafluorethylen und Perfluorpropylvinylether (PFA), Copolymere von Tetrafluorethylen und Hexafluorpropen (FEP) umfasst.

3. Kochartikel nach Anspruch 2, wobei das Fluorkohlenstoffharz Polytetrafluorethylen (PTFE) oder eine Mischung aus PTFE und PFA (PTFE / PFA) oder eine Mischung aus PTFE und FEP (PTFE / FEP) oder eine Mischung aus PTFE, PFA und FEP (PTFE / PFA / FEP) ist.

4. Kochartikel nach einem der vorhergehenden Ansprüche, wobei das Befestigungsharz aus Polyamidimiden (PAI), Polyetherimiden (PEI), Polyamiden (PI), Polyetherketonen (PEK) und Polyetheretherketonen (PEEK), Polyethersulfiden (PES), Polyphenylensulfiden (PPS) und Gemischen davon ausgewählt ist.

5. Kochartikel nach einem der vorhergehenden Ansprüche, wobei die Füllstoffe aus Seltenerdoxiden Füllstoffe aus Lanthanoidoxid sind.

6. Kochartikel nach Anspruch 5, wobei die Füllstoffe aus Seltenerdoxiden Ceroxid allein oder im Gemisch mit mindestens einem anderen Lanthanoidoxid umfassen.

7. Kochartikel nach einem der vorhergehenden Ansprüche, wobei 50 % der Füllstoffe aus Seltenerdoxiden mindestens ihre größte charakteristische Abmessung zwischen 0,1 µm und 50 µm haben.

8. Kochartikel nach Anspruch 7, wobei 50 % der Füllstoffe aus Seltenerdoxiden mindestens ihre größte charakteristische Abmessung zwischen 1 µm und 50 µm und vorzugsweise zwischen 5 µm und 25 µm haben.

9. Kochartikel nach Anspruch 7, wobei 50 % der Füllstoffe aus Seltenerdoxiden mindestens ihre größte charakteristische Abmessung zwischen 0,1 µm und 1 µm und vorzugsweise zwischen 0,1 µm und 0,3 µm haben.

10. Kochartikel nach einem der vorhergehenden Ansprüche, wobei die Füllstoffe aus Seltenerdoxiden in einem Gehalt zwischen 0,1 und 20 Gew.-% bezogen auf das Gesamttrockengewicht der Schicht vorliegen.

11. Kochartikel nach einem der vorhergehenden Ansprüche, wobei die Trockendicke der Schicht zwischen 1 µm und 25 µm liegt.

12. Kochartikel nach einem der vorhergehenden Ansprüche, wobei der Träger aus metallischem Material, Glas, Keramik oder Terrakotta ist.

13. Kochartikel nach Anspruch 12, wobei der Träger metallisch ist und aus eloxiertem oder nicht eloxiertem, wahlweise poliertem, gebürstetem, sandgestrahltem oder mikrosandgestrahltem Aluminium oder aus wahlweise poliertem, gebürstetem, sandgestrahltem oder mikrosandgestrahltem Stahl oder aus wahlweise poliertem, gebürstetem, sandgestrahltem oder mikrosandgestrahltem Edelstahl oder aus Gusseisen, Aluminium oder Eisen oder aus wahlweise gehämmertem oder poliertem Kupfer ist.

14. Kochartikel nach Anspruch 13, wobei der Träger metallisch ist und abwechselnde Schichten aus Metall und/oder aus Metalllegierung umfasst oder eine Kalotte aus Aluminiumguss, Aluminium oder Aluminiumlegierungen ist, die mit einem äußeren Boden aus Edelstahl ausgekleidet ist.

15. Verfahren zur Herstellung eines Kochartikels nach einem der Ansprüche 1 bis 14, wobei das Verfahren die folgenden Schritte umfasst:
a) Bereitstellen eines Trägers;
b) Zubereiten einer wässrigen Dispersion von Fluorkohlenstoffharz, gegebenenfalls im Gemisch mit dem Befestigungsharz;
c) Dispergieren der Füllstoffe aus Seltenerdoxiden in der Fluorkohlenstoffharzdispersion;
d) Aufbringen der in Schritt c) erhaltenen Dispersion auf die mindestens eine Seite des Trägers; und
e) Brennen der Gesamtheit.

## Claims

1. Cooking utensil comprising a support having an inner face being able to receive food and an outer face intended to be arranged towards a heat source, and a coating arranged on at least one of the two faces,
said cooking utensil being **characterised in that** the coating comprises at least one layer comprising:
• a fluorocarbon resin matrix, individually or in a mixture with a thermostable fastening resin and resistant to a temperature greater than 200°C, this or these resin(s) forming a continuous sintered network, and
• rare earth oxide charges dispersed in said matrix, 50% of said charges having at least the greater characteristic dimension thereof greater than or equal to 0.1 µm.

2. Cooking utensil according to claim 1, wherein the fluorocarbon resin is selected in the group comprising polytetrafluoroethylene (PTFE), modified PTFE, tetrafluoroethylene and perfluoropropylvinylether (PFA) copolymers, tetrafluoroethylene and hexafluoropropene (FEP) copolymers.

3. Cooking utensil according to claim 2, wherein the fluorocarbon resin is polytetrafluoroethylene (PTFE), or a PTFE and PFA (PTFE/PFA) mixture, or a PTFE and FEP (PTFE/FEP) mixture, or a PTFE, PFA and FEP (PTFE/PFA/FEP) mixture.

4. Cooking utensil according to any one of the preceding claims, wherein the fastening resin is selected from among imide polyamides (PAI), imide polyethers (PEI), polyamides (PI), polyetherketones (PEK), polyetheretherketones (PEEK), polyethersulphides (PES), polyphenylene sulphides (PPS), and the mixtures thereof.

5. Cooking utensil according to any one of the preceding claims, wherein the rare earth oxide charges are lanthanide oxide charges.

6. Cooking utensil according to claim 5, wherein the rare earth oxide charges comprise cerium oxide, individually or in a mixture with at least one other lanthanide oxide.

7. Cooking utensil according to any one of the preceding claims, wherein 50% of the rare earth oxide charges have at least the greater characteristic dimension thereof of between 0.1 µm and 50 µm.

8. Cooking utensil according to claim 7, wherein 50% of the rare earth oxide charges have at least the greater characteristic dimension thereof of between 1 µm and 50 µm, and preferably between 5 µm and 25 µm.

9. Cooking utensil according to claim 7, wherein 50% of the rare earth oxide charges have at least the greatest characteristic thereof of between 0.1 µm and 1 µm, and preferably between 0.1 µm and 0.3 µm.

10. Cooking utensil according to any one of the preceding claims, wherein the rare earth oxide charges are present in a content of between 0.1 and 20% by weight with respect to the total dry weight of the layer.

11. Cooking utensil according to any one of the preceding claims, wherein the dry thickness of said layer is of between 1µm and 25µm.

12. Cooking utensil according to any one of the preceding claims, wherein the support is made of metal, glass, ceramic or terracotta material.

13. Cooking utensil according to claim 12, wherein the support is metallic and is made of aluminium, anodised or not, possibly polished, brushed, sandblasted or bead-blasted, or made of steel, possibly polished, brushed, sandblasted or bead-blasted, or made of stainless steel, possibly polished, brushed, sandblasted or bead-blasted, or cast steel, aluminium or iron, or copper, possibly hammered or polished.

14. Cooking utensil according to claim 13, wherein the support is metallic and comprises an alternance of layers made of metal and/or made of metal alloy or is a cap made of cast aluminium, aluminium or aluminium alloy lined with an outer, stainless steel bottom.

15. Method for producing a cooking utensil such as defined according to any one of claims 1 to 14, said method comprising the following steps:
a) supplying a support;
b) preparing an aqueous dispersion of fluorocarbon resin, possible in a mixture with the fastening resin;
c) dispersing rare earth oxide charges in the fluorocarbon resin dispersion;
d) applying the dispersion obtained in step c) on the at least one face of the support; and
e) cooking the assembly.
